# EUROPEAN PATENT APPLICATION

(11) **EP 4 056 874 A1**
(43) Date of publication of application: **14.09.2022**
(21) Application number: 22160518.1
(22) Date of filing: 07.03.2022
(51) Int. Cl.: F16H 55/36, F16C 13/00, F16H 55/49

(54) **PULLEY ASSEMBLY**

(30) Priority: 12.03.2021 IT 202100005843
(71) Applicant: Aktiebolaget SKF, 415 50 Göteborg (SE)
(72) Inventor: Urso, Stefano, 40137 Bologna (IT); Pedulla, Rosario, 40139 Bologna (IT); Peters, Ralf, 42857 Remscheid (DE)
(74) Representative: Tedeschini, Luca

(57) **Abstract**

Pulley assembly (1) for belt tensioners (100), having a bearing unit (20) provided with a rotating outer ring (22) and made of metal; an outer wheel body (30) overmoulded onto the outer ring (22) to rotate with the outer ring (22) itself and intended to interact with a belt (100); and a gripping surface (40) at the interface between the outer wheel body (30) and the outer ring (22) to prevent at least circumferential slip between the outer wheel body (30) and the outer ring (22) itself; an axial retaining means (51) is integral with the outer ring (22) and has two lateral edge members (50) located axially on opposite sides of the gripping surface (40) to engage the outer wheel body (30) and prevent any axial movement of the outer wheel body (30) relative to the outer ring (22) itself.

## Description

### Technical Field of the Invention

The present invention relates to a pulley assembly of the type comprising a bearing unit, and an outer wheel body positioned on the bearing to rotate with it, and intended to interact with a belt.

### Known art

Pulley assemblies of the type described above are known to be used, in particular, as belt tensioners in lift or hoist systems.

In such pulley assemblies, the bearing unit has a fixed inner ring and a rotating outer ring coaxial with the inner ring, made of metal, while the outer wheel body is made of plastics material overmoulded onto the outer ring of the bearing to rotate with it, and is intended to interact with a belt.

To prevent the outer body of the wheel from slipping axially and circumferentially with respect to the outer ring of the bearing unit, such outer ring is provided with a gripping surface generally defined by a plurality of indentations and recesses which interpenetrate with the outer body of the wheel to make it angularly and axially of one piece with the outer ring. However, in some applications where the loads are higher, or where the action of the belt on the outer body of the wheel tends to cause it to be axially displaced, or where there is a need to limit lateral displacements of the belt itself, the gripping surface evidences technical limitations; attempts have been made to overcome these, for example, by making the outer body of the wheel of a piece of the same material as the outer ring of the bearing and providing it with a corrugated outer guide surface.

Although the latter solution has certainly proved to be more resistant than that with the overmoulded outer wheel body, it does however present more than insignificant manufacturing costs and, above all, makes the pulley assembly particularly heavy, whereas greater lightness is always desirable in these applications.

### Summary of the Invention

The object of the present invention is to provide a pulley assembly which, while meeting the requirements of lightness and the containment of production costs, is free from the disadvantages described above.

According to the present invention there is provided a pulley assembly having the characteristics set out in the appended claims.

### Brief Description of the Drawings

The invention will now be described with reference to the appended drawings illustrating some non-limiting embodiments, in which:
- Figure 1 is a side view in elevation of a first preferred embodiment of the pulley assembly according to the present invention;
- Figure 2 is a cross-sectional view of the pulley assembly in Figure 1;
- Figures 3 and 4 illustrate, on an enlarged scale, respective details of the pulley assembly in Figure 2, with parts in cross-section and parts removed for clarity;
- Figure 5 is a cross-sectional view of a second preferred embodiment of the pulley assembly according to the present invention; and
- Figure 6 shows a detail of the pulley assembly in Figure 5, on an enlarged scale and with parts in cross-section and parts removed for clarity.

### Detailed description

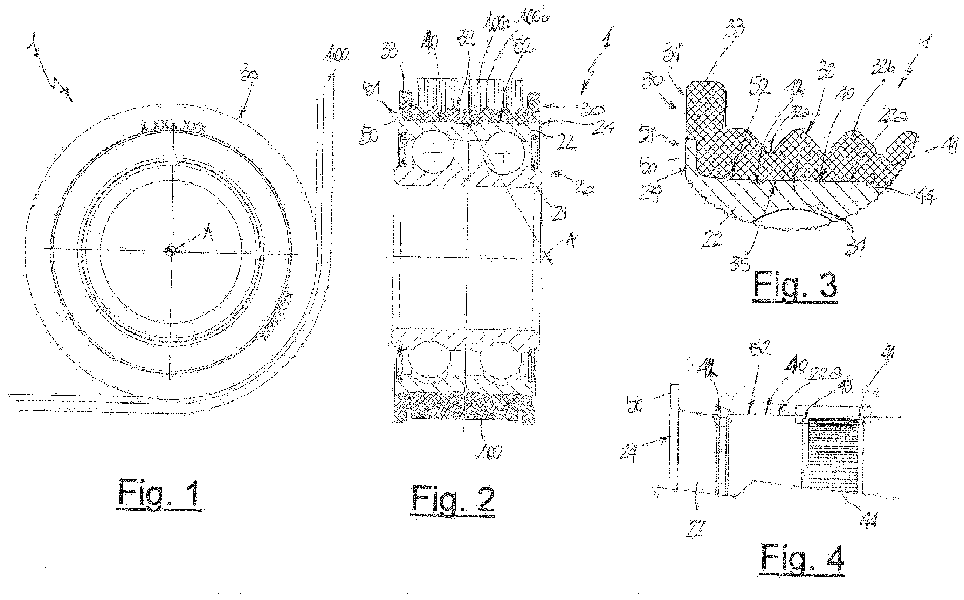

With reference to Figures 1 and 2, 1 denotes a pulley assembly for belt tensioners 100 in lift or hoist systems as a whole.

Pulley assembly 1 has a central axis A, and comprises:
- a bearing unit 20 provided with a fixed inner ring 21 and a rotating outer ring 22 coaxial with inner ring 21 and made of metal;
- an outer wheel body 30 made of plastics material, overmoulded onto bearing unit 20 to rotate together with outer ring 22; and
- a gripping surface 40 at the interface between outer wheel body 30 and outer ring 22 of bearing unit 20 to prevent at least circumferential slip between outer wheel body 30 and outer ring 22.

In the preferred embodiment illustrated in Figures 1 and 2, gripping surface 40 is defined by an outer cylindrical surface 22a of outer ring 22 and, as further illustrated in Figure 4, by a central annular groove 41 provided along a centre line of symmetry of bearing unit 20 on cylindrical surface 22a, and by two annular grooves 42 provided laterally and axially on cylindrical surface 22a on opposite sides of central annular groove 41. Whereas the two annular grooves 42 have a substantially trapezoidal shape in axial cross-section, central annular groove 41 is provided within its cylindrical base 43 with a plurality of teeth or knurls 44 axially uniformly distributed about axis A. These teeth or knurls 44 are radially less tall than a radial depth of central annular groove 41 in relation to cylindrical surface 22a and do not therefore protrude radially beyond central annular groove 41, that is from cylindrical surface 22a itself.

Pulley assembly 1 further comprises two lateral annular axial retaining edge members 50, which are of one piece with outer ring 22 of bearing unit 20 and are located axially on opposite sides of gripping surface 40 to engage outer wheel body 30 and prevent any axial movement of outer wheel body 30 with respect to outer ring 22 itself.

The two lateral annular edge members 50 are made of one piece with outer ring 22 of bearing unit 20, extend radially projecting from surface 22a of outer ring 22, and, as also illustrated in Figure 3, are flush with respective axial annular surfaces 31 of outer wheel body 30 and flush with respective axial outer annular surfaces 24 of outer ring 22.

In other words, the two lateral annular edge members 50 form a whole with rotating outer ring 22 and are obtained by a machining operation removing material from rotating outer ring 22 itself: between them, the two lateral edge members 50 define bilateral axial means 51 for retaining outer wheel body 30, also including, in addition to the same two edge members 50, a U-shaped radial seat 52 onto which outer wheel body 30 is moulded. Gripping surface 40 with its central annular groove 41 and its two annular grooves 42 also lies within radial seat 52, and this together with bilateral axial retaining means 51, blocks any possible relative movement between outer wheel body 30 and rotating outer ring 22, both circumferentially and axially. Furthermore, through the innovative design of bilateral axial retaining means 51, both the effect of thermal expansion when in use and the effect of ageing of the plastics material of outer wheel body 30 have absolutely no effect on the stability of the relative position between outer wheel body 30 and rotating outer ring 22.

As also illustrated in Figures 2 and 3, outer body 30 is intended to interact with a belt 100 by laterally guiding belt 100 itself, and has:
- an outer surface 32 shaped to interact with belt 100, and
- two lateral annular edges 33, located axially on opposite sides of shaped outer surface 32, which are able to laterally guide belt 100, that is to limit any axial displacement of belt 100 with respect to axis A, and are each axially bounded by a relative lateral annular surface 31. Shaped outer surface 32 is a corrugated surface provided with multiple numbers of longitudinal V-shaped recesses 32a and teeth 32b, which are engaged in a matching manner by corresponding teeth 100a and recesses 100b in belt 100. As a result of this mutual engagement between outer surface 32 and belt 100, any possible oscillation of the latter also gives rise to axial forces on outer wheel body 30, which, if it were not adequately secured on rotating outer ring 22 by bilateral axial retaining means 51, might in the long run become axially misaligned, with increased noise and wear on the parts.

Outer wheel body 30 further comprises a cylindrical wall 34 radially bounded on the outside by shaped outer surface 32 and radially bounded on the inside by a shaped inner surface 35 which, through the overmoulding, faithfully copies the profile of cylindrical surface 22a. Since, as just mentioned, outer wheel body 30 is overmoulded onto bearing unit 20, that is onto rotating outer ring 22 within seat 52, the two annular edge members 50 are at least partly embedded in outer wheel body 30 itself, and have radial dimensions which are smaller than a minimum radial thickness of cylindrical wall 34 at its own shaped outer surface 32. Furthermore, the two lateral annular edge members 50 also have axial thicknesses which are smaller than the axial dimensions of relative lateral annular edges 33 so as to provide them with the necessary support so that they may bend, should belt 100 end up against one of two annular edges 33 for any accidental reason, and to impart a relatively reduced weight to pulley assembly 1 while still allowing belt 100 to be correctly routed, together with excellent resistance to the axial forces of belt 100 itself on outer wheel body 30, which is secured both axially by bilateral axial retaining means 51, with the support too of the mutual grip of grooves 41 and 42, as well as circumferentially by the mutual grip of cylindrical wall 34 against teeth or knurls 44.

The innovative features described above make it possible to provide a particularly quiet pulley assembly 1, through belt 100 being in contact with the plastic of outer wheel body 30, and one of particularly reduced weight through making outer wheel body 30 of plastics material - a material which, like bearing unit 20, makes it possible to provide outer wheel bodies 30 in shapes which are as suitable as possible for applications without major complications in the production system, thus also making pulley assembly 1 according to the present invention particularly versatile.

According to one embodiment, not illustrated but easily deducible from what has been set out and described above, the two lateral annular edge members 50 are always made of one piece with outer ring 22 of bearing unit 20 in the same manner as described above, but instead of being flush with relative outer axial annular surfaces 24 of outer ring 22 they are axially recessed by an amount substantially equal to their own thickness or to a multiple thereof not exceeding three and, in any event, not exceeding the thickness of lateral annular edges 33. In this way the two lateral annular edge members 50 will no longer be flush with relative axial annular surfaces 31 of outer wheel body 30, but will be completely embedded within outer wheel body 30. At the same time, the two lateral edge members 50 will always be embedded in a substantial axial relationship to corresponding lateral annular edges 33 and will always provide them with the necessary support against bending as described above.

This alternative arrangement is particularly suitable for applications of pulley unit 1 where atmospheric agents might attack the material of the two lateral annular edge members 50, limiting their service life.

As a further alternative development of the arrangement described above, a development that may well be implemented in the arrangement described in the appended figures, the two lateral annular edge members 50 which are completely embedded in outer wheel body 30 may have radial dimensions that are even larger than the minimum radial thickness of cylindrical wall 34 at its shaped outer surface 32, and may also extend up to the inside of lateral annular edges 33 constituting direct reinforcement for lateral annular edges 33 themselves. This arrangement, which inevitably entails an increase in the weight of the pulley assembly according to the present invention, is suitable in cases of particularly heavy-duty and stressed applications, while remaining decidedly competitive in comparison with the current arrangements being introduced.

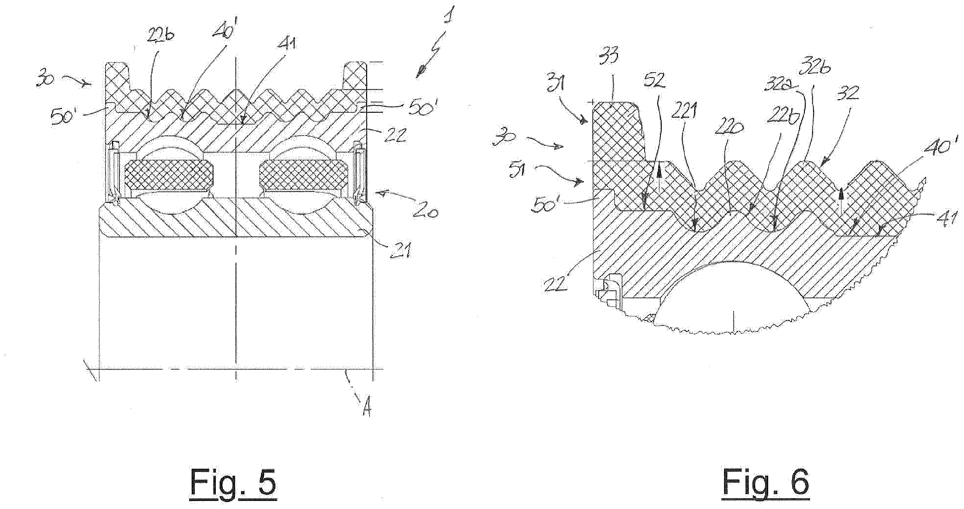

In the alternative embodiment illustrated in Figures 5 and 6, the gripping surface, here indicated as 40', differs from gripping surface 40 in the example illustrated in Figures 2-4 in the configuration presented by cylindrical surface 22a on opposite sides of central annular groove 41.

In particular, gripping surface 40' is no longer a cylindrical surface 22a having two annular grooves 42, but is instead a substantially corrugated surface 22b provided with annular lands 220 and annular recesses 221 axially alternating with each other from central annular groove 41 as far as corresponding lateral annular axially retaining edge member 50'. The two lateral edge members 50', together with U-shaped radial seat 52 and annular lands 220 and annular recesses 221, define the bilateral axial retaining means 51 for outer wheel body 30, on which outer wheel body 30 is itself moulded. The annular lands 220 and alternating annular recesses 221 of surface 22b follow the pattern of teeth 32b and longitudinal V-shaped recesses 32a in shaped outer surface 32, and, as a result of this match between outer surface 32 and surface 22b, gripping surface 40' has demonstrated very good performance in the function of axially retaining outer wheel body 30 in relation to outer ring 22 itself, in both experiments and the test phase. Thus, lateral annular axially retaining edge members 50' may have radial heights of even smaller dimensions than the dimensions of the radial heights of edge members 50 described above to the further advantage of the radial and/or axial thickness of outer pulley body 30.

Depending on the loading range of pulley assembly 1 when in use, gripping surface 40' may have more or fewer annular lands 220 and annular recesses 221 alternating axially with each other; in particular, as illustrated in Figures 5 and 6, gripping surface 40' may have two annular lands 220 and two annular recesses 221, but, in accordance with embodiments that are not illustrated and may easily be deduced from the above, gripping surface 40' may also have an even greater number of annular lands 220 and annular recesses 221, above all because of the fact that the overall axial dimensions of pulley 1 itself and width of belt 100 also increase as the loading range of pulley assembly 1 in use increases.

In addition to the embodiment of the invention described above, it must be understood that there are many other variants. It should also be understood that these embodiments are only illustrative and do not limit either the scope of the invention, its applications or its possible configurations. On the contrary, although the above description will allow a person skilled in the art to implement the present invention according to at least one exemplified embodiment thereof, it should be understood that many variants of the components described are possible without going beyond the scope of the invention as defined in the appended claims, which are to be interpreted literally and/or according to their legal equivalents.

## Claims

1. Pulley assembly (1) for belt tensioners (100), comprising:
- a bearing unit (20) provided with a fixed inner ring (21) and a rotating outer ring (22) coaxial with the inner ring (21) and made of metal;
- an outer wheel body (30) overmoulded onto the bearing unit (20) to rotate with the rotating outer ring (22) and intended to interact with a belt (100), guiding the belt (100) itself; and
- a gripping surface (40) (40') at the interface between the outer wheel body (30) and the outer ring (22) of the bearing unit (20) to prevent at least circumferential slip between the outer wheel body (30) and the outer ring (22);
the pulley assembly (1) being **characterized in that** it also comprises axial retaining means (51), which are of one piece with the outer ring (22) of the bearing unit (20) and are arranged axially on opposite sides of the gripping surface (40) (40') to engage the outer wheel body (30) and prevent any axial displacement of the outer wheel body (30) with respect to the outer ring (22) itself.

2. Pulley assembly according to claim 1, **characterized in that** the axial retaining means (51) comprise two lateral annular edge members (50) (50'), which are made of one piece with the outer ring (22) of the bearing unit (20) and are flush with the respective axial annular surfaces (31) of the outer wheel body (30).

3. Pulley assembly according to claim 2, **characterized in that** the outer wheel body (30) has an outer surface (32) shaped to interact with a belt (100), and two lateral annular edges (33), axially located on opposite sides of the outer surface (32) shaped to guide the belt (100) itself; each lateral annular edge (33) being axially bounded by a relative lateral annular surface (31).

4. Pulley assembly according to claim 3, **characterized in that** the shaped outer surface (32) is a corrugated surface provided with multiple numbers of longitudinal V-shaped recesses (32a) and teeth (32b).

5. Pulley assembly according to claim 3 or 4, **characterized in that** the two lateral annular edge members (50) (50') are at least partly embedded in the outer wheel body (30), and have radial dimensions that are smaller than the dimensions of a minimum radial thickness of the outer wheel body (30) at its shaped outer surface (32).

6. Assembly according to claim 5, **characterized in that** the two lateral annular edge members (50) (50') have axial thicknesses smaller than the axial dimensions of the relative lateral annular edges (33).

7. Assembly according to any one of the preceding claims, **characterized in that** the gripping surface (40) comprises a central annular groove (41) provided along a central line of symmetry of the bearing unit (20), and two annular grooves (42) located axially on opposite sides of the annular groove (41).

8. Assembly according to claim 7, **characterized in that** the central annular groove (41) is provided with a plurality of teeth or knurls (44) within its own cylindrical base (43) axially uniformly distributed about the axis (A).

9. Assembly according to any one of claims 1 to 7, **characterized in that** the gripping surface (40') comprises a substantially corrugated surface (22b) provided with annular lands (220) and recesses (221) alternating axially with each other from central annular groove (41) to a respective lateral annular axially-retaining edge member (50').
